# EUROPÄISCHE PATENTANMELDUNG

(11) **EP 1 655 934 A1**
(43) Veröffentlichungstag der Anmeldung: **10.05.2006**
(21) Anmeldenummer: 05016925.9
(22) Anmeldetag: 04.08.2005
(51) Int. Cl.: H04M 3/42, H04M 3/487

(54) **Ansage des Anrufernamens mittels CLI**

(30) Priorität: 09.11.2004 DE 102004053997
(71) Anmelder: Deutsche Telekom AG, 53113 Bonn (DE)
(72) Erfinder: Brackmann, Ludwig, Dipl.-Ing., 53225 Bonn (DE)

(57) **Zusammenfassung**

Verfahren zur Ausgabe von Information an einen via Kommunikationsnetz Angerufenen (B), wobei die Information Daten über den Anschluss des Anrufers (A), insbesondere über dessen Identität, enthält, wobei die Information einer Datei entnommen wird, in der sie der Kennung ("Caller Line Identification", CLI) des Anrufers zugeordnet ist, wobei die Information vor dem Aufbau der Verbindung über ein dem Angerufenen zugeordnetes Endgerät wahrnehmbar ausgegeben wird und wobei die Information dem Eintrag einer zentral über das Kommunikationsnetz zugänglichen Auskunftsdatenbank entnommen wird, in der Informationen zu einer Vielzahl über das Kommunikationsnetz erreichbarer Teilnehmer gespeichert sind.

## Beschreibung

Die vorliegende Erfindung betrifft ein Verfahren zur Ausgabe von Information an einen via Kommunikationsnetz, insbesondere Telephonnetz oder Internet, Angerufenen, wobei die Information Daten über den Anschluss des Anrufers, insbesondere über dessen Identität, enthält, wobei die Information einer Datei entnommen wird, in der sie der Kennung ("Caller Line Identification", CLI) des Anrufers zugeordnet ist, wobei die Information vor dem Aufbau der Verbindung über ein dem Angerufenen zugeordnetes Endgerät wahrnehmbar ausgegeben wird. Die Erfindung betrifft zudem ein System zur Umsetzung des Verfahrens.

Schon heute ist die Anzeige der Rufnummer des Anrufers respektive auch die Anzeige seines Namens auf dem Display des Telephons ein von Teilnehmern viel genutzter und beliebter Service. Dieser vom Netzanbieter zur Verfügung gestellte Service basiert darauf, dass zusammen mit der angewählten Rufnummer auch die CLI des Anrufers über das digitale Telephonnetz übertragen wird und daher jederzeit zur Verfügung steht. Entsprechend kann diese Rufnummer auch auf dem Display des angewählten Endgerätes angezeigt werden. Diese Funktion ist auch bekannt unter der Abkürzung "CLIP" ("Caller Line Identification Publication"). Der Angerufene kann sich also aufgrund der angezeigten Rufnummer überlegen, ob er den Anruf entgegennehmen möchte oder nicht.

Da der Anrufer vom Angerufenen meist nicht nur über die angezeigte Rufnummer identifiziert werden kann, ist es vorteilhaft, dass manche "unpersönliche" Rufnummer in einen leicht lesbaren Namen konvertiert. Dazu muss der Name allerdings in Verbindung mit der Rufnummer im Rahmen einer im Endgerät des Angerufenen realisierten Telephonbuch- oder Adressbuchfunktion niedergelegt sein. Die heute bekannten Systeme erlauben es allerdings auch, die Anzeige der Rufnummer und damit auch des Telephonbucheintrages zu unterdrücken ("Caller Line Identification Restriction", CLIR). Damit bleibt die Anonymität des Anrufenden gewahrt, was in bestimmten Situationen sicherlich von Vorteil ist.

Nachteilig an dem bislang bekannten System ist, dass die Nützlichkeit der Vorabanzeige in unmittelbaren Zusammenhang mit der genannten Telephonbuch- oder Adressbuchfunktion des jeweiligen Endgerätes steht und dass entsprechend nur die Information verständlich ausgegeben wird, die in dem Telephonbuch gespeichert ist. Somit bekommt der Angerufene also nur die Namen angezeigt, die er selber gespeichert hat, wobei davon auszugehen ist, dass er diese Anrufer in der Regel auch sprechen will. Beispielsweise ist die Nummer des zuständigen Finanzamtes selten gespeichert, so dass der Angerufene von einem solchen mitunter unerfreulichen Anruf trotzAnzeige der Rufnummer, die ihm nicht präsent ist, dennoch überrascht wird.

Die Aufgabe der vorliegenden Erfindung ist es nunmehr, ein solches Verfahren zu schaffen, das sich mit einfachen Mitteln kostengünstig umsetzen lässt und das dem Nutzer eine möglichst umfassende Information bezüglich der Identität des Anrufers bietet, wobei ihm die Information vor der Herstellung der Verbindung dargeboten wird.

Diese Aufgabe wird durch ein Verfahren mit den kennzeichnenden Merkmalen des Anspruch 1 gelöst. Vorteilhafte Ausgestaltungen des Verfahrens sind in den Unteransprüchen genannt.

Der wesentliche Grundgedanke der Erfindung liegt darin, sich bei der Zuordnung einer CLI zu einer "lesbaren" Information nicht wie bislang der in der kleinen und vom Nutzer selbstaufgebauten Datenbank des Telephons zu bedienen, sondern die Informationen einer umfangreichen Auskunftsdatenbank, wie sie insbesondere dem Netzanbieter zur Verfügung steht, für die Zwecke der Konvertierung zu nutzen. In einer solchen Auskunftsdatenbank sind Informationen zu einer Vielzahl von über das Telephonnetz erreichbaren Teilnehmern gespeichert. Die gewünschte Information zum Anschluss des Anrufers, insbesondere zu dessen Identität wird somit erfindungsgemäß dem Eintrag einer Auskunftsdatenbank entnommen, die zentral über das Telephonnetz zugänglich ist. An dieser Stelle sei betont, dass es das erfindungsgemäße Verfahren keinesfalls auf Telephonnetze ob stationär oder mobil eingeschränkt ist. Auch andere Kommunikationsnetze, insbesondere das Internet, können mit ihren entsprechenden Endgeräten eingesetzt werden. Insofern wird im Zusammenhang mit dieser Anmeldung das Telephonnetz synonym für alle möglichen Kommunikationsnetze verwendet.

Diese erfindungsgemäße Vorgehensweise wird zumindest in Deutschland durch die Änderung des Telekommunikationsgesetzes ermöglicht, das die sogenannte Inverssuche, also die Suche eines Eintrages anhand einer Telephonnummer, in Auskunftsdatenbanken erlaubt. Durch diese Rückwärtssuche anhand der eindeutigen Telefonnummer kann der Netzanbieter eine Anrufidentifikation bereits vor Verbindungsaufbau an den anrufenden Teilnehmer weitergeben.

Die Erfindung bietet dem Nutzer vor allem den Vorteil, dass er nunmehr für die Konvertierung auf den großen Datenbestand der Auskunftsdatenbanken zugreifen kann. Er erhält somit bei nahezu jedem Anruf die Auskunft über den Anrufenden, insbesondere über dessen Identität, und/oder seinen gesamten Eintrag, der neben der Adresse auch die Faxnummer, die email- und/oder Internetadresse (URL). Auch wenn die vor dem Anruf eingehende CLI nicht unmittelbar mit dem Namen des Anrufers in Verbindung gebracht werden kann, beispielsweise weil dieser als solcher nicht hinterlegt ist oder weil die Anschlussnummern einer Telephonanlage nicht übertragen werden, so erhält der Angerufene doch die Information "Finanzamt" über die zentrale CLI des Finanzamtes dargeboten. Das ist sogar von Vorteil, weil er mit dem Namen "Müller" auch nicht unbedingt gleich den anrufenden Beamten des Finanzamtes in Verbindung bringt. Die interessante Information wird dem Angerufenen über ein seinem Anschluss zugeordnetes Endgerät dargeboten, wobei dieses Endgerät zunächst unabhängig vom Telephon des Angerufenen sein kann.

Es ist allerdings von Vorteil, wenn die Information unmittelbar über das gerade vom Angerufenen in die Hand genommene Telephon ausgegeben wird. Der Vorteil liegt also darin, dass der Angerufene vor dem Verbindungsaufbau unabhängig von eigenen Telefonbucheinträgen, den Anrufer erkennen und gegebenenfalls den eingehenden Ruf ablehnen oder annehmen kann.

Vorteilhafterweise wird das erfindungsgemäße Verfahren durch einen vom Netzprovider bereitgestellten Dienst realisiert. Dabei "fängt" ein im Netz basierter Server den vom anrufenden A-Teilnehmer eingeleiteten Anruf ab, recherchiert mittels einer Inverssuche nach der Information, insbesondere nach dem Namen des A-Teilnehmers und signalisiert dann erst dem B-Teilnehmer als Angerufenem den eingehenden Anruf, wobei die Information zusammen mit oder kurze Zeit nach dem Eingangssignal ausgegeben wird. Das Durchstellen des Anrufes und die Suche kann zeitgleich geschehen, so dass der A-Teilnehmer keine lästige Verzögerung hinnehmen muss. Somit wird die Information beim Erkennen eines Anrufes automatisch durch den vom Netzprovider bereitgestellten Dienst aus der Auskunftsdatenbank entnommen, der übertragenen CLI zugeordnet und zum Angerufenen durchgestellt. Der überlegt sich, ob er den Anruf entgegennehmen will und baut gegebenenfalls die Verbindung durch "Abheben" auf.

Bei der Information, die zum Angerufenen übertragen wird, kann es sich um einen Teil aber vorteilhafterweise auch um den gesamten Inhalt des Eintrags in der Auskunftsdatenbank handeln. Dieser Eintrag kann neben dem Namen auch die Adresse oder sogar spezielle Firmendaten, beispielsweise Hinweise auf das Sortiment oder auch Werbung enthalten. In dem Fall, dass eine spezifisch auf den Angerufenen ausgerichtete Information mitübertragen werden soll, kann es vorteilhaft sein, wenn der Anrufer insbesondere durch Vorwahl einer bestimmten Ziffer oder durch Drücken einer definierten Taste auf seinem Endgerät nur den gewünschten Teil des Eintrages aus der Auskunftsdatenbank auswählt. So könnte die Vorwahl "1" bedeuten, dass nur der Name des Anrufers übertragen wird, während die "2" den Namen mit einer Werbebotschaft verbindet. Da der Netzanbieter die Möglichkeit hat, über den Inhalt der Auskunftsdatenbank zu wachen, kann ein Missbrauch des Dienstes, beispielsweise eine Irreführung des Angerufenen, ausgeschlossen werden.

In einer besonderen Form der Erfindung kann es vorteilhaft sein, wenn der Dienst eine eventuell beim Anrufenden vorgesehene Anzeigeunterdrückung ("Caller Line Identification Restriction", CLIR) übergeht und eine Information aus den Eintrag der Auskunftsdatenbank auf jeden Fall an den Angerufenen übermittelt. Dabei kann davon ausgegangen werden, dass der Eintrag in der Auskunftsdatenbank vom jedem Teilnehmer freiwillig vorgenommen wurde. Dem erfindungsgemäßen Vorgehen könnte der Teilnehmer, der einen Eintrag in die Auskunftsdatenbank wünscht, auch generell zustimmen. Außerdem sei an dieser Stelle betont, dass das Verfahren auch dann eingesetzt werden kann, wenn der Angerufene, wie beispielsweise die Polizei oder Staatsanwaltschaft, die CLI trotz der vom Anrufenden gewünschten Unterdrückung dennoch angezeigt bekommt.

Bezüglich der Ausgabe der Information über das Endgerät des Angerufenen gibt es verschiedene Möglichkeiten, die jeweils mit besonderen Vorteilen einhergehen. Zum einen ist es möglich, die Information über ein Display des dem Anschluss des Angerufenen zugeordneten Telephons auszugeben. Diese Art der Ausgabe lässt sich technisch einfach realisieren und bedarf keiner besonders umfangreichen Datenübertragung. Gerade für Angerufene, die beispielsweise beim Autofahren, gerade nicht auf das Display schauen können, ist es besonders vorteilhaft, wenn eine Sprachausgabe vorgesehen wird. Dazu wird die Information, insbesondere der Anrufernamen, mittel eines Konvertierungsprogramms ("text-to-speach") in Sprache umgewandelt und vor dem Verbindungsaufbau über den Lautsprecher des dem Anschluss des Angerufenen zugeordneten Telephons angesagt. Auch in diesem Fall kann nur der Name oder der gesamte Telefonbucheintrag angesagt werden. Dieser Dienst kann geräteunabhängig agieren und ist nicht an ein entsprechendes Device gebunden.

Das Konvertierungsprogramm kann entweder auf dem zentralen Server realisiert sein, so dass eine schnelle Konvertierung auch größerer Einträge ermöglicht wird. In diesem Fall müssten allerdings größere Datenmengen übertragen werden. Daher kann es vorteilhaft sein, wenn das Konvertierungsprogramm auf dem Endgerät läuft und dort die beispielsweise per SMS eingehende Nachricht unmittelbar in Sprache wandelt.

Bezüglich der Ausgabe der Information an den Angerufenen sind auch verschiedene Verfahrensweisen möglich: In einem ersten Fall kann der Dienst in gewisser Weise eine Sekretariatsfunktion erfüllen. Dazu kann der Anruf per Klingelzeichen beim Angerufenen angezeigt werden. Sobald dieser abhebt, meldet sich die Stimme und kündigt den Anruf vom Finanzamt an. Der Dienst klärt dann über die Möglichkeit zur Herstellung der Verbindung oder zum Abbruch auf. Währenddessen könnte auch der Anrufer per Ansage vertröstet werden. Diese Vorgehensweise kann den Vorteil haben, dass die Anfrage an die Datenbank erst nach dem aktiven Abheben gestartet werden braucht, so dass vergebliche Anrufe keine Anfrage initiieren. Außerdem kann diese Vorgehensweise mit jedem heute bekannten Endgerät realisiert werden.

In einer anderen Art kann das Rufsignal, insbesondere der Klingelton, unmittelbar mit einer Ansage gekoppelt werden. Eine "intelligente" Rufsignal-Funktion erzeugt dann bei Eingang einer über den erfindungsgemäßen Dienst gesendeten CLI eine Sprachausgabe, die direkt über den Lautsprecher des Endgerätes ausgegeben wird, bevor der Angerufene zum Hörer greift oder gar abhebt. Statt mit einem Klingelton meldet sich das Endgerät dann mit der Meldung: "Hallo, das Finanzamt ruft an. Wollen Sie den Anruf entgegen nehmen ?". Eine solche Vorgehensweise, bei der die Informationsdarbietung unmittelbar mit dem mit Rufsignal einhergeht hat den Vorteil der einfacheren Handhabung der Endgeräte und kann mit modernen Geräten realisiert werden. Ein wesentlicher Vorteil liegt auch in der Verkürzung der Wartezeit für den Anrufenden. Über die Profile des Endgerätes können dann unterschiedliche Features, wie Wiederholungen oder Lautstärken, eingestellt werden.

Nachfolgend werden Ausführungsbeispiele der Erfindung noch einmal anhand der einzelnen aufeinanderfolgenden Schritte erläutert:
- Schritt 1 :: Der A-Teilnehmer ruft mit Rufnummerüberleitung den B-Teilnehmer an.
- Schritt 2 :: Der B-Teilnehmer hat den vom Netzanbieter angebotenen Dienst "Ansage des Anrufernamens" abboniert.
- Schritt 3 :: Ein im Netz basierter Server nimmt den Ruf an, recherchiert mittels Inverssuche nach dem Namen oder anderen Informationen des A- Teilnehmers, hält gegebenenfalls den Anrufer hin und signalisiert dem B-Teilnehmer den Anruf durch ein Rufsignal.
- Schritt 4 :: Der Verbindungsaufbau erfolgt zunächst nur zwischen dem Server und dem B-Teilnehmer. Der Server spielt dem B-Teilnehmer den Namen des Anrufers ein, nachdem dieser Abgehoben hat.
- Schritt 5 :: Der A-Teilnehmer wartet darauf, ob der B-Teilnehmer innerhalb eines Timeout wieder auflegt oder der B-Teilnehmer einen vorgegebenen Befehl zum Abbruch des Telefonats gibt (z.B. "Drücken Sie die Null, wenn.....).
- Schritt 6 :: Wünscht der B-Teilnehmer den A-Teilnehmer zu sprechen, stellt der Server die Verbindung zwischen beiden Teilnehmern her.

In einer anderen Variante gibt der Dienst schon in Schritt 3 die Information über den Anrufer insbesondere per Sprache, zusammen mit oder statt des Rufsignals aus. Der B-Teilnehmer kann dann durch Abheben die Verbindung herstellen oder die Zeit bis zum automatischen Timeout verstreichen lassen.

## Patentansprüche

1. Verfahren zur Ausgabe von Information an einen via Kommunikationsnetz Angerufenen (B), wobei die Information Daten über den Anschluss des Anrufers (A), insbesondere über dessen Identität, enthält, wobei die Information einer Datei entnommen wird, in der sie der Kennung ("Caller Line Identification", CLI) des Anrufers zugeordnet ist, wobei die Information vor dem Aufbau der Verbindung über ein dem Angerufenen zugeordnetes Endgerät wahrnehmbar ausgegeben wird,
**dadurch gekennzeichnet,**
**dass** die Information dem Eintrag einer zentral über das Kommunikationsnetz zugänglichen Auskunftsdatenbank entnommen wird, in der Informationen zu einer Vielzahl über das Kommunikationsnetz erreichbarer Teilnehmer gespeichert sind.

2. Verfahren nach Anspruch 1,
**dadurch gekennzeichnet, dass** die Information automatisch beim Erkennen eines Anrufes durch einen vom Netzprovider bereitgestellten Dienst entnommen, der CLI zugeordnet und zum Angerufenen mitübertragen wird.

3. Verfahren nach Anspruch 1 oder 2,
**dadurch gekennzeichnet, dass** die Information dem Eintrag in der Auskunftsdatenbank vollständig entspricht.

4. Verfahren nach Anspruch 1 oder 2,
**dadurch gekennzeichnet, dass** der Anrufer insbesondere durch Vorwahl einer bestimmten Ziffer auf seinem Endgerät einen Teil des Eintrages der Auskunftsdatenbank auswählt, der zum Angerufenen mitübertragen werden soll.

5. Verfahren nach einem der vorherigen Ansprüche,
**dadurch gekennzeichnet, dass** eine eventuell vorgesehene Anzeigeunterdrückung ("Caller Line Identification Restriction", CLIR) übergangen wird, wenn der Eintrag in der Auskunftsdatenbank vom Teilnehmer freiwillig vorgenommen und/oder wenn der Übermittlung vom Teilnehmer generell zugestimmt wurde.

6. Verfahren nach einem der vorherigen Ansprüche,
**dadurch gekennzeichnet, dass** die Information über den Bildschirm des dem Anschluss des Angerufenen zugeordneten Telephons ausgegeben wird.

7. Verfahren nach einem der vorherigen Ansprüche,
**dadurch gekennzeichnet, dass** die Information mittel eines Konvertierungsprogramms in Sprache umgewandelt und über den Lautsprecher des dem Anschluss des Angerufenen zugeordneten Telephons ausgegeben wird.

8. Verfahren nach einem der vorherigen Ansprüche,
**dadurch gekennzeichnet, dass** die Information zusammen mit dem Rufsignal und/oder statt des Rufsignals ohne Zutun des Angerufenen ausgegeben wird.

9. Verfahren nach einem der vorherigen Ansprüche,
**dadurch gekennzeichnet, dass** die Information zusammen nach dem Abheben durch den Angerufenen ausgegeben wird.

10. System zur Durchführung des Verfahrens nach einem der vorherigen Ansprüche.
